# EUROPEAN PATENT APPLICATION

(11) **EP 4 271 025 A1**
(43) Date of publication of application: **01.11.2023**
(21) Application number: 21909060.2
(22) Date of filing: 29.11.2021
(51) Int. Cl.: H04W 24/00

(54) **NEIGHBOR CELL MEASUREMENT TRIGGERING METHOD AND APPARATUS, AND COMPUTER READABLE STORAGE MEDIUM**

(30) Priority: 25.12.2020 CN 202011568347
(71) Applicant: Spreadtrum Semiconductor (Nanjing) Co., Ltd., Nanjing, Jiangsu 211899 (CN)
(72) Inventor: LEI, Zhenzhu, Shanghai 201203 (CN)
(74) Representative: Epping - Hermann - Fischer
(86) International application number: PCT/CN2021/133841
(87) International publication number: WO 2022/135061

(57) **Abstract**

A neighbor cell measurement triggering method and apparatus, and a computer readable storage medium. The neighbor cell measurement triggering method comprises: receiving a neighbor cell measurement trigger condition, the neighbor cell measurement trigger condition comprising: a first neighbor cell measurement trigger threshold, a second neighbor cell measurement trigger threshold, and a reference signal quality value corresponding to the first neighbor cell measurement trigger threshold being lower than a reference signal quality value corresponding to the second neighbor cell measurement trigger threshold; determining a target trigger threshold for triggering neighbor cell measurement from the first neighbor cell measurement trigger threshold and the second neighbor cell measurement trigger threshold according to the current mobility; and when it is detected that the reference signal quality of a current serving cell is lower than the target trigger threshold, triggering the neighbor cell measurement activity.

## Description

### CROSS-REFERENCE TO RELATED APPLICATIONS

This application claims priority to Chinese Patent Application No. 202011568347.8, filed on December 25, 2020, and entitled "NEIGHBOR CELL MEASUREMENT TRIGGERING METHOD AND APPARATUS, AND COMPUTER READABLE STORAGE MEDIUM", the entire disclosure of which is incorporated herein by reference.

### TECHNICAL FIELD

The present disclosure generally relates to radio communication technology field, and more particularly, to a neighbor cell measurement triggering method and apparatus, and a computer readable storage medium.

### BACKGROUND

Radio Resource Management (RRM) measurement is a basic activity to realize mobility management, and is also one of essential reasons for energy consumption of User Equipment (UE).

At present, in existing Narrowband Internet-of-Things (NB-IOT) standards, a UE does not support RRM measurement in a connected state (RRC_CONNECTDE STATE). That is, when the UE fails in radio link, the UE needs to enter an idle state to perform a search process of a target cell (i.e., RRM measurement activity), and initiates a Radio Resource Control (RRC) re-establishment procedure after finding a suitable target cell. To reduce a delay required for the RRC re-establishment procedure, the UE is expected to perform some RRM measurement activities (i.e., neighbor cell measurement activities) before the radio link failure. In this case, the UE has already known the target cell before the radio link failure, and does not need to perform a search for the target cell during the RRC re-establishment procedure.

In existing neighbor cell measurement mechanisms, the UE determines whether to perform neighbor cell measurement according to reference signal quality of a current serving cell, that is, the UE starts neighbor cell measurement activity (i.e., monitoring reference signals of neighbor cells to obtain quality of service of neighbor cells) merely when the reference signal quality (for example, RSRP) of the serving cell is lower than a certain threshold.

However, under the existing neighbor cell measurement mechanisms, energy consumption of the UE is relatively large.

### SUMMARY

Embodiments of the present disclosure may reduce energy consumption of neighbor cell measurement.

In an embodiment of the present disclosure, a neighbor cell measurement triggering method is provided, including: receiving a neighbor cell measurement trigger condition which includes a first neighbor cell measurement trigger threshold and a second neighbor cell measurement trigger threshold, wherein a reference signal quality value corresponding to the first neighbor cell measurement trigger threshold is lower than a reference signal quality value corresponding to the second neighbor cell measurement trigger threshold; determining a target trigger threshold for triggering neighbor cell measurement from the first neighbor cell measurement trigger threshold and the second neighbor cell measurement trigger threshold based on current mobility; and triggering a neighbor cell measurement activity based on detecting that reference signal quality of a current serving cell is lower than the target trigger threshold.

Optionally, said receiving a neighbor cell measurement trigger condition includes any of the following: receiving system information which carries the neighbor cell measurement trigger condition; or receiving high-layer signaling which carries the neighbor cell measurement trigger condition.

Optionally, said determining a target trigger threshold for triggering neighbor cell measurement from the first neighbor cell measurement trigger threshold and the second neighbor cell measurement trigger threshold based on current mobility includes: determining that the first neighbor cell measurement trigger threshold is the target trigger threshold based on determining that a low mobility criterion is met; and determining that the second neighbor cell measurement trigger threshold is the target trigger threshold based on determining that the low mobility criterion is not met.

Optionally, the first neighbor cell measurement trigger threshold includes at least one of the following: reference signal receiving power or reference signal receiving quality; and the second neighbor cell measurement trigger threshold includes at least one of the following: reference signal receiving power or reference signal received quality.

In an embodiment of the present disclosure, a neighbor cell measurement triggering method is provided, including: receiving a neighbor cell measurement trigger condition which includes a first measurement trigger threshold corresponding to intra-frequency neighbor cells and a second measurement trigger threshold corresponding to inter-frequency neighbor cells, wherein a reference signal quality value corresponding to the first measurement trigger threshold is lower than a reference signal quality value corresponding to the second measurement trigger threshold; and triggering a neighbor cell measurement activity based on detecting that reference signal quality of a current serving cell is lower than the first measurement trigger threshold.

Optionally, said triggering a neighbor cell measurement activity includes: triggering an intra-frequency neighbor cell measurement activity.

Optionally, said triggering an intra-frequency neighbor cell measurement activity includes: based on detecting that reference signal quality corresponding to an intra-frequency neighbor cell currently being measured is lower than the first measurement trigger threshold, sequentially measuring other intra-frequency neighbor cells; and based on detecting that the reference signal quality corresponding to the intra-frequency neighbor cell currently being measured is higher than the first measurement trigger threshold within a preset time period, stop triggering measurement of other intra-frequency neighbor cells.

Optionally, said triggering an intra-frequency neighbor cell measurement activity includes: based on detecting that reference signal quality corresponding to N intra-frequency neighbor cells is lower than the first measurement trigger threshold, triggering the inter-frequency neighbor cell measurement activity, wherein N is configured by a base station, N≤M, and M is a number of intra-frequency neighbor cells configured by the base station.

Optionally, said triggering the inter-frequency neighbor cell measurement activity includes: based on detecting that reference signal quality corresponding to an inter-frequency neighbor cell currently being measured is lower than the first measurement trigger threshold, sequentially measuring other inter-frequency neighbor cells; and based on detecting a target inter-frequency neighbor cell, stopping triggering measurement of other inter-frequency neighbor cells, wherein reference signal quality corresponding to the target inter-frequency neighbor cell is higher than the first measurement trigger threshold within a preset time period.

Optionally, said receiving a neighbor cell measurement trigger condition includes any of the following: receiving system information which carries the neighbor cell measurement trigger condition; or receiving high-layer signaling which carries the neighbor cell measurement trigger condition.

In an embodiment of the present disclosure, a neighbor cell measurement triggering method is provided, including: transmitting to a UE a neighbor cell measurement trigger condition which includes a first neighbor cell measurement trigger threshold and a second neighbor cell measurement trigger threshold, wherein a reference signal quality value corresponding to the first neighbor cell measurement trigger threshold is lower than a reference signal quality value corresponding to the second neighbor cell measurement trigger threshold, to make the UE determine a target trigger threshold for triggering neighbor cell measurement from the first neighbor cell measurement trigger threshold and the second neighbor cell measurement trigger threshold based on current mobility after receiving the neighbor cell measurement trigger condition, and trigger a neighbor cell measurement activity based on detecting that reference signal quality of a current serving cell is lower than the target trigger threshold.

In an embodiment of the present disclosure, a neighbor cell measurement triggering method is provided, including: transmitting to a UE a neighbor cell measurement trigger condition which includes a first measurement trigger threshold corresponding to intra-frequency neighbor cells and a second measurement trigger threshold corresponding to inter-frequency neighbor cells, wherein a reference signal quality value corresponding to the first measurement trigger threshold is lower than a reference signal quality value corresponding to the second measurement trigger threshold, to make the UE trigger a neighbor cell measurement activity based on detecting that reference signal quality of a current serving cell is lower than the first measurement trigger threshold after receiving the neighbor cell measurement trigger condition.

In an embodiment of the present disclosure, a neighbor cell measurement triggering apparatus is provided, including: a first receiving circuitry configured to receive a neighbor cell measurement trigger condition which includes a first neighbor cell measurement trigger threshold and a second neighbor cell measurement trigger threshold, wherein a reference signal quality value corresponding to the first neighbor cell measurement trigger threshold is lower than a reference signal quality value corresponding to the second neighbor cell measurement trigger threshold; a target trigger threshold determining circuitry configured to determine a target trigger threshold for triggering neighbor cell measurement from the first neighbor cell measurement trigger threshold and the second neighbor cell measurement trigger threshold based on current mobility; and a first triggering circuitry configured to trigger a neighbor cell measurement activity based on detecting that reference signal quality of a current serving cell is lower than the target trigger threshold.

In an embodiment of the present disclosure, a neighbor cell measurement triggering apparatus is provided, including: a second receiving circuitry configured to receive a neighbor cell measurement trigger condition which includes a first measurement trigger threshold corresponding to intra-frequency neighbor cells and a second measurement trigger threshold corresponding to inter-frequency neighbor cells, wherein a reference signal quality value corresponding to the first measurement trigger threshold is lower than a reference signal quality value corresponding to the second measurement trigger threshold; and a second triggering circuitry configured to trigger a neighbor cell measurement activity based on detecting that reference signal quality of a current serving cell is lower than the first measurement trigger threshold.

In an embodiment of the present disclosure, a neighbor cell measurement triggering apparatus is provided, including: a first transmitting circuitry configured to transmit to a UE a neighbor cell measurement trigger condition which includes a first neighbor cell measurement trigger threshold and a second neighbor cell measurement trigger threshold, wherein a reference signal quality value corresponding to the first neighbor cell measurement trigger threshold is lower than a reference signal quality value corresponding to the second neighbor cell measurement trigger threshold, to make the UE determine a target trigger threshold for triggering neighbor cell measurement from the first neighbor cell measurement trigger threshold and the second neighbor cell measurement trigger threshold based on current mobility after receiving the neighbor cell measurement trigger condition, and trigger a neighbor cell measurement activity based on detecting that reference signal quality of a current serving cell is lower than the target trigger threshold.

In an embodiment of the present disclosure, a neighbor cell measurement triggering apparatus is provided, including: a second transmitting circuitry configured to transmit to a UE a neighbor cell measurement trigger condition which includes a first measurement trigger threshold corresponding to intra-frequency neighbor cells and a second measurement trigger threshold corresponding to inter-frequency neighbor cells, wherein a reference signal quality value corresponding to the first measurement trigger threshold is lower than a reference signal quality value corresponding to the second measurement trigger threshold, to make the UE trigger a neighbor cell measurement activity based on detecting that reference signal quality of a current serving cell is lower than the first measurement trigger threshold after receiving the neighbor cell measurement trigger condition.

In an embodiment of the present disclosure, a non-volatile or non-transitory computer readable storage medium having computer instructions stored therein is provided, wherein when the computer instructions are executed, any one of the above methods is performed.

In an embodiment of the present disclosure, a neighbor cell measurement triggering apparatus including a memory and a processor is provided, wherein the memory has computer instructions stored therein, and when the processor executes the computer instructions, any one of the above methods is performed.

Embodiments of the present disclosure may provide following advantages.

The UE selects a corresponding target trigger threshold based on current mobility, and triggers the neighbor cell measurement activity based on that the reference signal quality of the current serving cell is lower than the target trigger threshold. Different mobility corresponds to different target trigger thresholds. By setting a relatively small target trigger threshold, measurement activities of the UE that meets the low mobility criterion may be reduced.

The base station transmits the first measurement trigger threshold corresponding to the intra-frequency neighbor cells and the second measurement trigger threshold corresponding to the inter-frequency neighbor cells. The UE triggers neighbor cell measurement activity merely based on detecting that reference signal quality corresponding to the current serving cell is lower than the first measurement trigger threshold, thereby reducing measurement activities of the UE.

### BRIEF DESCRIPTION OF THE DRAWINGS

FIG. 1 is a flow chart of a neighbor cell measurement triggering method according to an embodiment;
FIG. 2 is a flow chart of a neighbor cell measurement triggering method according to an embodiment;
FIG. 3 is a structural diagram of a neighbor cell measurement triggering apparatus according to an embodiment; and
FIG. 4 is a structural diagram of a neighbor cell measurement triggering apparatus according to an embodiment.

### DETAILED DESCRIPTION

As described in the background, in existing neighbor cell measurement mechanisms, the UE determines whether to perform neighbor cell measurement according to reference signal quality of a current serving cell, that is, the UE starts neighbor cell measurement activity (i.e., monitoring reference signals of neighbor cells to obtain quality of service of neighbor cells) merely when the reference signal quality (for example, RSRP) of the serving cell is lower than a certain threshold. However, under the existing neighbor cell measurement mechanisms, energy consumption of the UE is relatively large.

In the embodiments of the present disclosure, the UE selects a corresponding target trigger threshold based on current mobility, and triggers the neighbor cell measurement activity based on that the reference signal quality of the current serving cell is lower than the target trigger threshold. Different mobility corresponds to different target trigger thresholds. By setting a relatively small target trigger threshold, measurement activities of the UE that meets the low mobility criterion may be reduced.

In order to clarify the obj ects, characteristics and advantages of the disclosure, embodiments of present disclosure will be described in detail in conjunction with accompanying drawings.

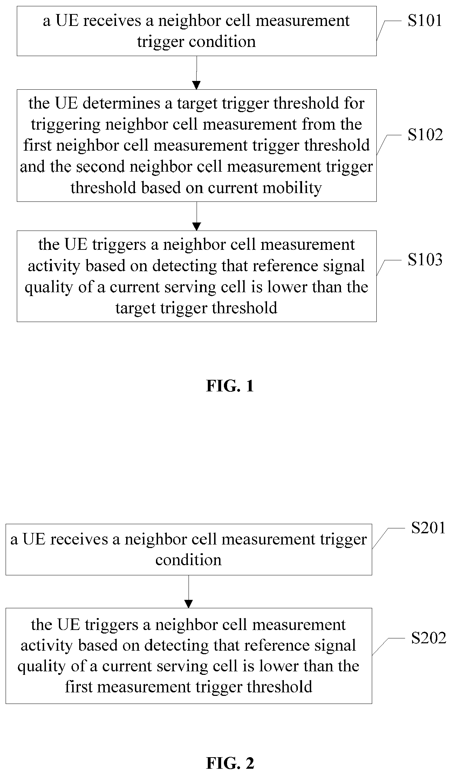

In an embodiment, a neighbor cell measurement triggering method is provided. Referring to FIG. 1, details of the method are provided via specific steps below.

In S101, a UE receives a neighbor cell measurement trigger condition.

In some embodiments, a base station may transmit the neighbor cell measurement trigger condition to the UE via system information or high-layer signaling. In some embodiments, the neighbor cell measurement trigger condition includes a first neighbor cell measurement trigger threshold and a second neighbor cell measurement trigger threshold, and a reference signal quality value corresponding to the first neighbor cell measurement trigger threshold is lower than a reference signal quality value corresponding to the second neighbor cell measurement trigger threshold.

In some embodiments, the high-layer signaling may be an RRC signaling.

In some embodiments, the first neighbor cell measurement trigger threshold may include a Reference Signal Receiving Power (RSRP) threshold, or a Reference Signal Receiving Quality (RSRQ) threshold, or both an RSRP threshold and an RSRQ threshold.

Accordingly, the second neighbor cell measurement trigger threshold may also include an RSRP threshold, or an RSRQ threshold, or both an RSRP threshold and an RSRQ threshold.

In some embodiments, for convenience of comparison, it may be set that a type of the first neighbor cell measurement trigger threshold is the same as a type of the second neighbor cell measurement trigger threshold. For example, the first neighbor cell measurement trigger threshold includes the RSRQ, the second neighbor cell measurement trigger threshold also includes the RSRQ, and the RSRQ corresponding to the second neighbor cell measurement trigger threshold is higher than the RSRQ corresponding to the first neighbor cell measurement trigger threshold.

In S102, the UE determines a target trigger threshold for triggering neighbor cell measurement from the first neighbor cell measurement trigger threshold and the second neighbor cell measurement trigger threshold based on current mobility.

In some embodiments, the UE may determine its current corresponding mobility. In the embodiments of the present disclosure, the UE may determine whether a current state meets a preset low mobility criterion, and select a target trigger threshold for triggering neighbor cell measurement based on a determined result on mobility.

In some embodiments, the UE may determine the current corresponding mobility based on a current own moving speed. When the UE meets the preset low mobility criterion, it is determined that the current moving speed of the UE is relatively low; and when the UE does not meet the preset low mobility criterion, it is determined that the current moving speed of the UE is high. Specifically, specific content and a determination method of the low mobility criterion may be referred to existing communication standards.

In some embodiments, when the UE determines that the current moving speed meets the low mobility criterion, the first neighbor cell measurement trigger threshold is determined as the target trigger threshold; otherwise, when the UE determines that the current moving speed does not meet the low mobility criterion, the second neighbor cell measurement trigger threshold is determined as the target trigger threshold.

In practice, a measurement relaxation mechanism is introduced in NR R16, and a low mobility judgment criterion is also introduced. Specifically, whether it is low mobility is determined based on whether a change range of RSRP of the UE exceeds a threshold value configured by a network within a certain time period.

In S 103, the UE triggers a neighbor cell measurement activity based on detecting that reference signal quality of a current serving cell is lower than the target trigger threshold.

In some embodiments, a reference signal quality value of the current serving cell may be compared with a reference signal quality value corresponding to the target trigger threshold. If the reference signal quality value of the current serving cell is smaller than the reference signal quality value corresponding to the target trigger threshold, the UE determines that the reference signal quality of the current serving cell is lower than the target trigger threshold.

In some embodiments, after the target trigger threshold is determined according to the mobility, the UE may compare the reference signal quality value of the serving cell currently camped on with the reference signal quality value corresponding to the target trigger threshold. The UE may trigger the neighbor cell measurement activity upon detecting that the reference signal quality value of the current serving cell is smaller than the reference signal quality value corresponding to the target trigger threshold.

In some embodiments, when the target trigger threshold is an RSRP threshold (hereinafter referred to as a threshold R1), the UE compares an RSRP value of the current serving cell (hereinafter referred to as R0) with R1. When R0 is smaller than R1, the neighbor cell measurement activity is triggered.

When the target trigger threshold is an RSRQ threshold (hereinafter referred to as Q1), the UE compares an RSRQ value of the current serving cell (hereinafter referred to as Q0) with R1. When Q0 is smaller than Q 1, the neighbor cell measurement activity is triggered.

When the target trigger threshold is R1 and Q1, it is necessary to compare R1 with R0, and compare Q1 with Q0. When R0 is smaller than R1, and Q0 is smaller than Q1, the neighbor cell measurement activity is triggered.

From above, the UE determines the target trigger threshold based on the current mobility, and triggers the neighbor cell measurement activity based on that the reference signal quality of the current serving cell is lower than the target trigger threshold. By setting a relatively small target trigger threshold, measurement activities of the UE that meets the low mobility criterion may be reduced.

In an embodiment, another neighbor cell measurement triggering method is provided. Referring to FIG. 2, details of the method are provided via specific steps below.

In S201, a UE receives a neighbor cell measurement trigger condition.

In some embodiments, a base station may transmit the neighbor cell measurement trigger condition to the UE via system information or high-layer signaling. In some embodiments, the neighbor cell measurement trigger condition includes a first neighbor cell measurement trigger threshold and a second neighbor cell measurement trigger threshold, and a reference signal quality value corresponding to the first neighbor cell measurement trigger threshold is lower than a reference signal quality value corresponding to the second neighbor cell measurement trigger threshold.

In some embodiments, the high-layer signaling may be an RRC signaling.

In some embodiments, the first neighbor cell measurement trigger threshold may include an RSRP threshold, or an RSRQ threshold, or both an RSRP threshold and an RSRQ threshold.

Accordingly, the second neighbor cell measurement trigger threshold may also include an RSRP threshold, or an RSRQ threshold, or both an RSRP threshold and an RSRQ threshold.

In some embodiments, for convenience of comparison, it may be set that a type of the first neighbor cell measurement trigger threshold is the same as a type of the second neighbor cell measurement trigger threshold. For example, the first neighbor cell measurement trigger threshold includes the RSRQ, the second neighbor cell measurement trigger threshold also includes the RSRQ, and the RSRQ corresponding to the second neighbor cell measurement trigger threshold is higher than the RSRQ corresponding to the first neighbor cell measurement trigger threshold.

In S202, the UE triggers a neighbor cell measurement activity based on detecting that reference signal quality of a current serving cell is lower than the first measurement trigger threshold.

In some embodiments, the reference signal quality value corresponding to the current serving cell may be compared with the reference signal quality value corresponding to the first measurement trigger threshold. If the reference signal quality value of the current serving cell is smaller than the reference signal quality value corresponding to the first measurement trigger threshold, it is determined that the reference signal quality of the current serving cell is lower than the first measurement trigger threshold.

In some embodiments, based on detecting that the reference signal quality corresponding to the current serving cell is lower than the first measurement trigger threshold, an intra-frequency neighbor cell measurement activity may be triggered first.

From practical applications, the intra-frequency measurement means that a measured neighbor cell and the current serving cell belong to a same frequency point, and inter-frequency measurement means that the measured neighbor cell and the current serving cell belong to different frequency points.

In the embodiments of the present disclosure, during the intra-frequency neighbor cell measurement, if it is detected that the reference signal quality corresponding to the intra-frequency neighbor cell currently being measured is lower than the first measurement trigger threshold, other configured intra-frequency neighbor cells may be measured sequentially.

During the intra-frequency neighbor cell measurement, if it is detected that the reference signal quality corresponding to the intra-frequency neighbor cell currently being measured is higher than the first measurement trigger threshold within a preset time period, the UE may stop triggering measurement of other intra-frequency neighbor cells.

In some embodiments, the base station may configure a maximum number N of intra-frequency neighbor cells for measurement to the UE through system information or RRC dedicated configuration signaling. After receiving configuration from the base station, the UE can learn the maximum number of intra-frequency neighbor cells for measurement.

For example, the base station configures N=8. After receiving the configuration from the base station, the UE can know that the maximum number of intra-frequency neighbor cells for measurement is 8.

In the embodiments of the present disclosure, during the measurement of intra-frequency neighbor cells, if the UE detects that 8 intra-frequency neighbor cells have been measured, but none of reference signal quality corresponding to the intra-frequency neighbor cells is higher than the first measurement trigger threshold, an inter-frequency neighbor cell measurement activity may be triggered.

In some embodiments, N≤M, where M is a number of intra-frequency neighbor cells pre-configured by the base station.

In the embodiments of the present disclosure, during the inter-frequency neighbor cell measurement, if it is detected that the reference signal quality corresponding to the inter-frequency neighbor cell currently being measured is lower than the first measurement trigger threshold, other configured inter-frequency neighbor cells may be measured sequentially.

During the inter-frequency neighbor cell measurement, if it is detected that the reference signal quality corresponding to the inter-frequency neighbor cell currently being measured is higher than the first measurement trigger threshold within a preset time period, the UE may stop triggering measurement for other inter-frequency neighbor cells.

In some embodiments, the first neighbor cell measurement trigger threshold may include an RSRP threshold, or an RSRQ threshold, or both an RSRP threshold and an RSRQ threshold.

Accordingly, the second neighbor cell measurement trigger threshold may also include an RSRP threshold, or an RSRQ threshold, or both an RSRP threshold and an RSRQ threshold.

From above, the base station transmits the first measurement trigger threshold corresponding to the intra-frequency neighbor cells and the second measurement trigger threshold corresponding to the inter-frequency neighbor cells. The UE triggers neighbor cell measurement activity merely based on detecting that reference signal quality corresponding to the current serving cell is lower than the first measurement trigger threshold, thereby reducing measurement activities of the UE.

In some embodiments, S 101 to S103 and S201 to S202 are performed by the UE. It could be understood that a neighbor cell measurement triggering method may be performed by a base station as follows.

In an embodiment of the present disclosure, a neighbor cell measurement triggering method is provided, including: transmitting to a UE a neighbor cell measurement trigger condition which includes a first neighbor cell measurement trigger threshold and a second neighbor cell measurement trigger threshold, wherein a reference signal quality value corresponding to the first neighbor cell measurement trigger threshold is lower than a reference signal quality value corresponding to the second neighbor cell measurement trigger threshold, to make the UE determine a target trigger threshold for triggering neighbor cell measurement from the first neighbor cell measurement trigger threshold and the second neighbor cell measurement trigger threshold based on current mobility after receiving the neighbor cell measurement trigger condition, and trigger a neighbor cell measurement activity based on detecting that reference signal quality of a current serving cell is lower than the target trigger threshold.

In some embodiments, specific processes of the above neighbor cell measurement triggering method performed by the base station can be referred to S 101 to S 103, and are not described in detail here.

In an embodiment of the present disclosure, a neighbor cell measurement triggering method is provided, including: transmitting to a UE a neighbor cell measurement trigger condition which includes a first measurement trigger threshold corresponding to intra-frequency neighbor cells and a second measurement trigger threshold corresponding to inter-frequency neighbor cells, wherein a reference signal quality value corresponding to the first measurement trigger threshold is lower than a reference signal quality value corresponding to the second measurement trigger threshold, to make the UE trigger a neighbor cell measurement activity based on detecting that reference signal quality of a current serving cell is lower than the first measurement trigger threshold after receiving the neighbor cell measurement trigger condition.

In some embodiments, specific processes of the above neighbor cell measurement triggering method performed by the base station can be referred to S201 to S202, and are not described in detail here.

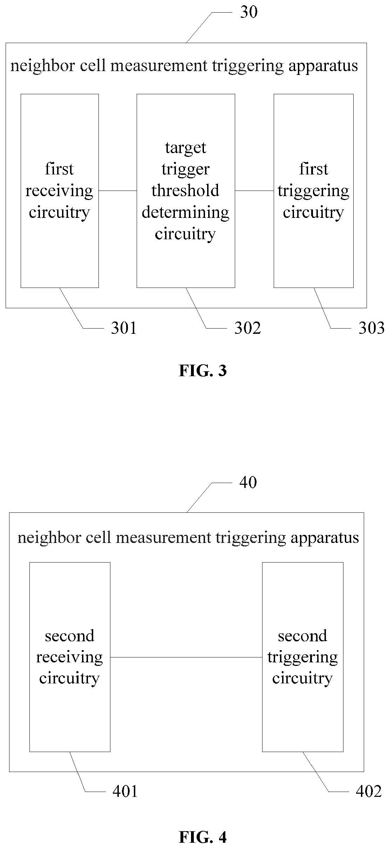

FIG. 3 is a structural diagram of a neighbor cell measurement triggering apparatus 30 according to an embodiment. The apparatus 30 includes a first receiving circuitry 301, a target trigger threshold determining circuitry 302 and a first triggering circuitry 303.

The first receiving circuitry 301 is configured to receive a neighbor cell measurement trigger condition which includes a first neighbor cell measurement trigger threshold and a second neighbor cell measurement trigger threshold, wherein a reference signal quality value corresponding to the first neighbor cell measurement trigger threshold is lower than a reference signal quality value corresponding to the second neighbor cell measurement trigger threshold.

The target trigger threshold determining circuitry 302 is configured to determine a target trigger threshold for triggering neighbor cell measurement from the first neighbor cell measurement trigger threshold and the second neighbor cell measurement trigger threshold based on current mobility.

The first triggering circuitry 303 is configured to trigger a neighbor cell measurement activity based on detecting that reference signal quality of a current serving cell is lower than the target trigger threshold.

In some embodiments, more details of the first receiving circuitry 301, the target trigger threshold determining circuitry 302 and the first triggering circuitry 303 may be referred to the above descriptions of S101 to S103, and are not repeated here.

In some embodiments, the apparatus 30 may correspond to a chip (such as a baseband chip) with a data processing function in a UE, or to a chip module containing a chip with a data processing function in a UE, or to a UE.

FIG. 4 is a structural diagram of a neighbor cell measurement triggering apparatus 40 according to an embodiment. The apparatus 40 includes a second receiving circuitry 401 and a second triggering circuitry 402.

The second receiving circuitry 401 is configured to receive a neighbor cell measurement trigger condition which includes a first measurement trigger threshold corresponding to intra-frequency neighbor cells and a second measurement trigger threshold corresponding to inter-frequency neighbor cells, wherein a reference signal quality value corresponding to the first measurement trigger threshold is lower than a reference signal quality value corresponding to the second measurement trigger threshold.

The second triggering circuitry 402 is configured to trigger a neighbor cell measurement activity based on detecting that reference signal quality of a current serving cell is lower than the first measurement trigger threshold.

In some embodiments, more details of the second receiving circuitry 401 and the second triggering circuitry 402 may be referred to the above descriptions of S201 to S202, and are not repeated here.

In some embodiments, the apparatus 40 may correspond to a chip (such as a baseband chip) with a data processing function in a UE, or to a chip module containing a chip with a data processing function in a UE, or to a UE.

An embodiment of the present disclosure further provides a neighbor cell measurement triggering apparatus, including: a first transmitting circuitry configured to transmit to a UE a neighbor cell measurement trigger condition which includes a first neighbor cell measurement trigger threshold and a second neighbor cell measurement trigger threshold, wherein a reference signal quality value corresponding to the first neighbor cell measurement trigger threshold is lower than a reference signal quality value corresponding to the second neighbor cell measurement trigger threshold, to make the UE determine a target trigger threshold for triggering neighbor cell measurement from the first neighbor cell measurement trigger threshold and the second neighbor cell measurement trigger threshold based on current mobility after receiving the neighbor cell measurement trigger condition, and trigger a neighbor cell measurement activity based on detecting that reference signal quality of a current serving cell is lower than the target trigger threshold.

An embodiment of the present disclosure further provides a neighbor cell measurement triggering apparatus, including: a second transmitting circuitry configured to transmit to a UE a neighbor cell measurement trigger condition which includes a first measurement trigger threshold corresponding to intra-frequency neighbor cells and a second measurement trigger threshold corresponding to inter-frequency neighbor cells, wherein a reference signal quality value corresponding to the first measurement trigger threshold is lower than a reference signal quality value corresponding to the second measurement trigger threshold, to make the UE trigger a neighbor cell measurement activity based on detecting that reference signal quality of a current serving cell is lower than the first measurement trigger threshold after receiving the neighbor cell measurement trigger condition.

In some embodiments, the above apparatus at a base station side may correspond to a chip with a data processing function in a base station device, or to a chip module containing a chip with a data processing function in a base station device, or to a base station device.

In an embodiment of the present disclosure, a non-volatile or non-transitory computer-readable storage medium having computer instructions stored therein is provided, wherein when the computer instructions are executed by a processor, any one of the above methods is performed.

In an embodiment of the present disclosure, a neighbor cell measurement triggering apparatus which includes a memory and a processor is provided, wherein the memory has computer instructions stored therein, and when the processor executes the computer instructions, the above method including S101 to S103 is performed, or the above method including S201 to S202 is performed.

In an embodiment of the present disclosure, a neighbor cell measurement triggering apparatus which includes a memory and a processor is provided, wherein the memory has computer instructions stored therein, and when the processor executes the computer instructions, the above method performed by the base station side is performed.

Those skilled in the art could understand that all or part of steps in the various methods in the above embodiments can be completed by instructing relevant hardware through a program, and the program can be stored in any computer-readable storage medium which includes a ROM, a RAM, a magnetic disk or an optical disk.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A neighbor cell measurement triggering method, **characterized by** comprising:
receiving a neighbor cell measurement trigger condition which comprises a first neighbor cell measurement trigger threshold and a second neighbor cell measurement trigger threshold, wherein a reference signal quality value corresponding to the first neighbor cell measurement trigger threshold is lower than a reference signal quality value corresponding to the second neighbor cell measurement trigger threshold;
determining a target trigger threshold for triggering neighbor cell measurement from the first neighbor cell measurement trigger threshold and the second neighbor cell measurement trigger threshold based on current mobility; and
triggering a neighbor cell measurement activity based on detecting that reference signal quality of a current serving cell is lower than the target trigger threshold.

2. The method according to claim 1, **characterized in that** said receiving a neighbor cell measurement trigger condition comprises any of the following:
receiving system information which carries the neighbor cell measurement trigger condition; or
receiving high-layer signaling which carries the neighbor cell measurement trigger condition.

3. The method according to claim 1, **characterized in that** said determining a target trigger threshold for triggering neighbor cell measurement from the first neighbor cell measurement trigger threshold and the second neighbor cell measurement trigger threshold based on current mobility comprises:
determining that the first neighbor cell measurement trigger threshold is the target trigger threshold based on determining that a low mobility criterion is met; and
determining that the second neighbor cell measurement trigger threshold is the target trigger threshold based on determining that the low mobility criterion is not met.

4. The method according to claim 1, **characterized in that** the first neighbor cell measurement trigger threshold comprises at least one of the following: reference signal receiving power or reference signal receiving quality; and the second neighbor cell measurement trigger threshold comprises at least one of the following: reference signal receiving power or reference signal received quality.

5. A neighbor cell measurement triggering method, **characterized by** comprising:
receiving a neighbor cell measurement trigger condition which comprises a first measurement trigger threshold corresponding to intra-frequency neighbor cells and a second measurement trigger threshold corresponding to inter-frequency neighbor cells, wherein a reference signal quality value corresponding to the first measurement trigger threshold is lower than a reference signal quality value corresponding to the second measurement trigger threshold; and
triggering a neighbor cell measurement activity based on detecting that reference signal quality of a current serving cell is lower than the first measurement trigger threshold.

6. The method according to claim 5, **characterized in that** said triggering a neighbor cell measurement activity comprises:
triggering an intra-frequency neighbor cell measurement activity.

7. The method according to claim 6, **characterized in that** said triggering an intra-frequency neighbor cell measurement activity comprises:
based on detecting that reference signal quality corresponding to an intra-frequency neighbor cell currently being measured is lower than the first measurement trigger threshold, sequentially measuring other intra-frequency neighbor cells; and
based on detecting that the reference signal quality corresponding to the intra-frequency neighbor cell currently being measured is higher than the first measurement trigger threshold within a preset time period, stop triggering measurement of other intra-frequency neighbor cells.

8. The method according to claim 7, **characterized in that** said triggering an intra-frequency neighbor cell measurement activity comprises:
based on detecting that reference signal quality corresponding to N intra-frequency neighbor cells is lower than the first measurement trigger threshold, triggering the inter-frequency neighbor cell measurement activity, wherein N is configured by a base station, N≤M, and M is a number of intra-frequency neighbor cells configured by the base station.

9. The method according to claim 8, **characterized in that** said triggering the inter-frequency neighbor cell measurement activity comprises:
based on detecting that reference signal quality corresponding to an inter-frequency neighbor cell currently being measured is lower than the first measurement trigger threshold, sequentially measuring other inter-frequency neighbor cells; and
based on detecting a target inter-frequency neighbor cell, stopping triggering measurement of other inter-frequency neighbor cells, wherein reference signal quality corresponding to the target inter-frequency neighbor cell is higher than the first measurement trigger threshold within a preset time period.

10. The method according to claim 5, **characterized in that** said receiving a neighbor cell measurement trigger condition comprises any of the following:
receiving system information which carries the neighbor cell measurement trigger condition; or
receiving high-layer signaling which carries the neighbor cell measurement trigger condition.

11. A neighbor cell measurement triggering method, **characterized by** comprising:
transmitting to a User Equipment (UE) a neighbor cell measurement trigger condition which comprises a first neighbor cell measurement trigger threshold and a second neighbor cell measurement trigger threshold, wherein a reference signal quality value corresponding to the first neighbor cell measurement trigger threshold is lower than a reference signal quality value corresponding to the second neighbor cell measurement trigger threshold, to make the UE determine a target trigger threshold for triggering neighbor cell measurement from the first neighbor cell measurement trigger threshold and the second neighbor cell measurement trigger threshold based on current mobility after receiving the neighbor cell measurement trigger condition, and trigger a neighbor cell measurement activity based on detecting that reference signal quality of a current serving cell is lower than the target trigger threshold.

12. A neighbor cell measurement triggering method, **characterized by** comprising:
transmitting to a User Equipment (UE) a neighbor cell measurement trigger condition which comprises a first measurement trigger threshold corresponding to intra-frequency neighbor cells and a second measurement trigger threshold corresponding to inter-frequency neighbor cells, wherein a reference signal quality value corresponding to the first measurement trigger threshold is lower than a reference signal quality value corresponding to the second measurement trigger threshold, to make the UE trigger a neighbor cell measurement activity based on detecting that reference signal quality of a current serving cell is lower than the first measurement trigger threshold after receiving the neighbor cell measurement trigger condition.

13. A neighbor cell measurement triggering apparatus, **characterized by** comprising:
a first receiving circuitry configured to receive a neighbor cell measurement trigger condition which comprises a first neighbor cell measurement trigger threshold and a second neighbor cell measurement trigger threshold, wherein a reference signal quality value corresponding to the first neighbor cell measurement trigger threshold is lower than a reference signal quality value corresponding to the second neighbor cell measurement trigger threshold;
a target trigger threshold determining circuitry configured to determine a target trigger threshold for triggering neighbor cell measurement from the first neighbor cell measurement trigger threshold and the second neighbor cell measurement trigger threshold based on current mobility; and
a first triggering circuitry configured to trigger a neighbor cell measurement activity based on detecting that reference signal quality of a current serving cell is lower than the target trigger threshold.

14. A neighbor cell measurement triggering apparatus, **characterized by** comprising:
a second receiving circuitry configured to receive a neighbor cell measurement trigger condition which comprises a first measurement trigger threshold corresponding to intra-frequency neighbor cells and a second measurement trigger threshold corresponding to inter-frequency neighbor cells, wherein a reference signal quality value corresponding to the first measurement trigger threshold is lower than a reference signal quality value corresponding to the second measurement trigger threshold; and
a second triggering circuitry configured to trigger a neighbor cell measurement activity based on detecting that reference signal quality of a current serving cell is lower than the first measurement trigger threshold.

15. A neighbor cell measurement triggering apparatus, **characterized by** comprising:
a first transmitting circuitry configured to transmit to a User Equipment (UE) a neighbor cell measurement trigger condition which comprises a first neighbor cell measurement trigger threshold and a second neighbor cell measurement trigger threshold, wherein a reference signal quality value corresponding to the first neighbor cell measurement trigger threshold is lower than a reference signal quality value corresponding to the second neighbor cell measurement trigger threshold, to make the UE determine a target trigger threshold for triggering neighbor cell measurement from the first neighbor cell measurement trigger threshold and the second neighbor cell measurement trigger threshold based on current mobility after receiving the neighbor cell measurement trigger condition, and trigger a neighbor cell measurement activity based on detecting that reference signal quality of a current serving cell is lower than the target trigger threshold.

16. A neighbor cell measurement triggering apparatus, **characterized by** comprising:
a second transmitting circuitry configured to transmit to a User Equipment (UE) a neighbor cell measurement trigger condition which comprises a first measurement trigger threshold corresponding to intra-frequency neighbor cells and a second measurement trigger threshold corresponding to inter-frequency neighbor cells, wherein a reference signal quality value corresponding to the first measurement trigger threshold is lower than a reference signal quality value corresponding to the second measurement trigger threshold, to make the UE trigger a neighbor cell measurement activity based on detecting that reference signal quality of a current serving cell is lower than the first measurement trigger threshold after receiving the neighbor cell measurement trigger condition.

17. A non-volatile or non-transitory computer readable storage medium having computer instructions stored therein, **characterized in that** when the computer instructions are executed by a processor, the method of any one of claims 1 to 12 is performed.

18. A neighbor cell measurement triggering apparatus comprising a memory and a processor, **characterized in that** the memory has computer instructions stored therein, and when the processor executes the computer instructions, the method of any one of claims 1 to 10 is performed.

19. A neighbor cell measurement triggering apparatus comprising a memory and a processor, **characterized in that** the memory has computer instructions stored therein, and when the processor executes the computer instructions, the method of claim 11 or 12 is performed.
